# EUROPEAN PATENT APPLICATION

(11) **EP 4 442 356 A1**
(43) Date of publication of application: **09.10.2024**
(21) Application number: 21965553.7
(22) Date of filing: 29.11.2021
(51) Int. Cl.: B01F 25/312, B01F 25/21, A01K 63/04

(54) **EDUCTOR FOR A FLUID INJECTION SYSTEM IN AQUACULTURE PONDS AND SYSTEM COMPRISING THE SAME**

(71) Applicant: Universidad Católica de la Santísima Concepción, Concepción 4090541 (CL)
(72) Inventor: VENEGAS CABELLO, Pablo Arturo, Concepción, 4030000 (CL); LLANCALEO SÁNCHEZ, Katherine Alejandra, Concepción, 4060341 (CL); NARVÁEZ DINAMARCA, Ana Lorena, Concepción, 4133677 (CL)
(74) Representative: Clarke, Modet y Cía., S.L.
(86) International application number: PCT/IB2021/061090
(87) International publication number: WO 2023/094868

(57) **Abstract**

There is provided an eductor for a fluid injection system in aquaculture ponds that allows the mixing of two or more fluids and the injection with high flow rate of said mixture and a system comprising the same. The eductor characterized in that it comprises three fluid inlets: a first fluid inlet for driving fluid; a second fluid suction inlet open to the aquaculture pond, in such a way as to allow entry of the same fluid contained in the aquaculture pond; and a third fluid suction inlet isolated from the second fluid suction inlet and from the medium or fluid contained in the aquaculture pond; a venturi section in fluid communication with the first fluid inlet, with the second fluid suction inlet and with the third fluid suction inlet; and a fluid outlet connected downstream of the venturi section in fluid communication with said venturi section.

## Description

### Technical field of the invention

The present invention relates to the field of injection and mixing of fluids, in particular to the injection and mixing of fluids by suction and in particular provides an eductor that allows the mixing of two or more fluids and the injection with high flow rate of said mixture and a system comprising said eductor.

### Background of the invention

In confined systems of traditional fish farming and with recirculation, the entry of water into the circular ponds is intended to provide the species in culture with the water quality conditions that allow their normal development. However, the mere fact of entering water into the ponds does not ensure good culture conditions, so it is necessary to generate fluid-dynamic conditions inside them that allow to generate mixing and self-cleaning to provide the right conditions for the development of the species. In the prior art, this result is normally achieved with the combined use of water injection systems and bottom drains in culture ponds.

The vertical sprayer type injection systems, standard technology in aquaculture, are composed of vertical tubes of different diameter that are drilled in the same direction and in a variable number. These injection tubes are located in the inner wall of the pond and inside a water flow is introduced that, when leaving at high speed through the perforations, generates a thrust force that sets in motion the body of water contained in the pond. However, in the prior art, the operating conditions of a culture and fluid dynamics unit inside are not clear. In response to this lack of information, an above-optimal volume of water is normally entered, assuming that a rapid renewal of the water body will produce mixture and homogeneity of water quality.

In the prior art, however, it has been observed that if the injection system does not properly transform the water flow rate into thrust force and flow patterns, the formation of local vortices that affect the mixing and homogeneity of dissolved oxygen, the dilution of contaminants, the self-cleaning of solids, and the health and normal development of the species will be favored. In addition, the use of large volumes of water requires oversized water treatment and movement systems, which increases the use of physical space, investments in equipment, operating costs and energy consumption.

Faced with this problem, in the prior art it has been evaluated, by the same inventors of the present application, the use of eductors as an alternative for the injection of water into the circular culture ponds, determining that these present substantially better results to generate mixing, homogeneity of water quality and removal of solids than traditional systems of the vertical sprayer type. However, the eductors used in the prior art do not allow the generation of a fluid mixture or the high-flow injection of the generated mixture without adversely affecting the species in culture.

Consequently, an eductor and a fluid injection and mixing system are required to overcome the deficiencies of the prior art.

### Summary of the invention

The present invention provides an eductor for a fluid injection system in aquaculture ponds that allows mixing of two or more fluids and high flow injection of said mixture characterized in that it comprises three fluid inlets: a first fluid inlet for driving fluid; a second fluid suction inlet open to the aquaculture pond, in such a way as to allow entry of the same fluid contained in the aquaculture pond; and a third fluid suction inlet isolated from the second fluid suction inlet and from the medium or fluid contained in the aquaculture pond; a venturi section in fluid communication with the first fluid inlet, with the second fluid suction inlet and with the third fluid suction inlet; and a fluid outlet connected downstream of the venturi section in fluid communication with said venturi section.

In a preferred embodiment, the eductor is characterized in that the fluid outlet is connected with the venturi section by a detachable connection. In a more preferred embodiment, the eductor is characterized in that said detachable connection is a threaded connection. In another more preferred embodiment, the eductor is characterized in that it comprises a plurality of fluid outlets interchangeable with each other, each of the fluid outlets having a corresponding outlet diameter and a corresponding opening angle.

In a preferred embodiment, the eductor is characterized in further comprising a cylindrical linkage operatively connected to the first driving fluid inlet. In a more preferred embodiment, the eductor is characterized in that said cylindrical joint comprises a first cylindrical section connected with the driving fluid inlet and a second cylindrical section coaxial with the first cylindrical section and rotatably slidable with respect to the first cylindrical section. In an even more preferred embodiment, the eductor is characterized in that it comprises means for fixing the rotation of the second cylindrical section with respect to the first cylindrical section.

In another preferred embodiment, the eductor is characterized in that it comprises fluid interruption means operatively connected with the third fluid suction inlet.

In a further preferred embodiment, the eductor is characterized in that the third fluid suction inlet has a detachable cap.

A second object of the present invention provides a fluid injection system in aquaculture ponds comprising at least one eductor allowing mixing of two or more fluids and high flow rate injection of said mixture, the system being characterized in that the at least one eductor comprises three fluid inlets: a first driving fluid inlet; a second fluid suction inlet open to the aquaculture pond, such as to allow entry of the same fluid contained in the aquaculture pond; and a third fluid suction inlet isolated from the second fluid suction inlet and from the medium or fluid contained in the aquaculture pond; a venturi section in fluid communication with the first driving fluid inlet, the second fluid suction inlet and the third fluid suction inlet; and a fluid outlet connected downstream of the venturi section in fluid communication with said venturi section.

In a preferred embodiment, the system is characterized in that it comprises: a first circulation line of a first fluid operatively connected with the first inlet of driving fluid of the eductor; and a second circulation line of a second fluid operatively connected with the third fluid suction inlet of the eductor. In a more preferred embodiment, the system is characterized in that it comprises a plurality of eductors, each of the eductors comprising: a corresponding driving fluid inlet, a corresponding first fluid suction inlet, a corresponding venturi section in fluid communication with the corresponding driving fluid inlet and with the corresponding first fluid suction inlet, a corresponding fluid outlet connected downstream of the corresponding venturi section in fluid communication with said corresponding venturi section, and a corresponding second fluid suction inlet in fluid communication with the corresponding venturi section and independent of the corresponding first fluid suction inlet; wherein the first fluid circulation line is operatively connected with each of the corresponding driving fluid inlets of the plurality of eductors; and wherein the second fluid circulation line is operatively connected with each of the corresponding second fluid suction inlets of the plurality of eductors.

In another preferred embodiment, the system is characterized in that the eductor is a first eductor; and in that it further comprises a second eductor that is positioned at an equivalent point in a radial arc of between 240° to 300°, measured from a location of the first eductor. In a more preferred embodiment, the system is characterized in that the second eductor comprises three fluid inlets: a first driving fluid inlet; a second fluid suction inlet open to the aquaculture pond such as to permit entry of the same fluid contained in the aquaculture pond; and a third fluid suction inlet isolated from the second fluid suction inlet and the medium or fluid contained in the aquaculture pond; a venturi section in fluid communication with the first driving fluid inlet, the second fluid suction inlet, and the third fluid suction inlet; and a fluid outlet connected downstream of the venturi section in fluid communication with said venturi section. In another more preferred embodiment, the system is characterized in that an output flow rate of the second eductor is less than an output flow rate of the first eductor.

In a preferred embodiment, the system is characterized in that the fluid outlet of the at least one eductor has an axis forming an angle of between 30° and 60° with a line tangent to a point on the inner wall of the aquaculture pond at which the at least one eductor is positioned. In a more preferred embodiment, the system is characterized in that the axis of the fluid outlet of the at least one eductor forms an angle of between 40° and 50° with the line tangent to the point of the aquaculture pond at which the at least one eductor is positioned.

In another preferred embodiment, wherein the system comprises a first eductor and a second eductor, the system is characterized in that the fluid outlet of the at least one eductor has an axis forming an angle of between 30° and 60° with a line tangent to a first point of the aquaculture pond at which the at least one eductor is positioned; and in that the second eductor has a second fluid outlet having an axis forming an angle of between 30° and 60° with a line tangent to a second point of the aquaculture pond at which the second eductor is positioned.

In another preferred embodiment, wherein the system comprises a first eductor and a second eductor, the system is characterized in that it comprises a plurality of second eductors, each being positioned in a same line with respect to the second eductor.

### Brief description of the figures

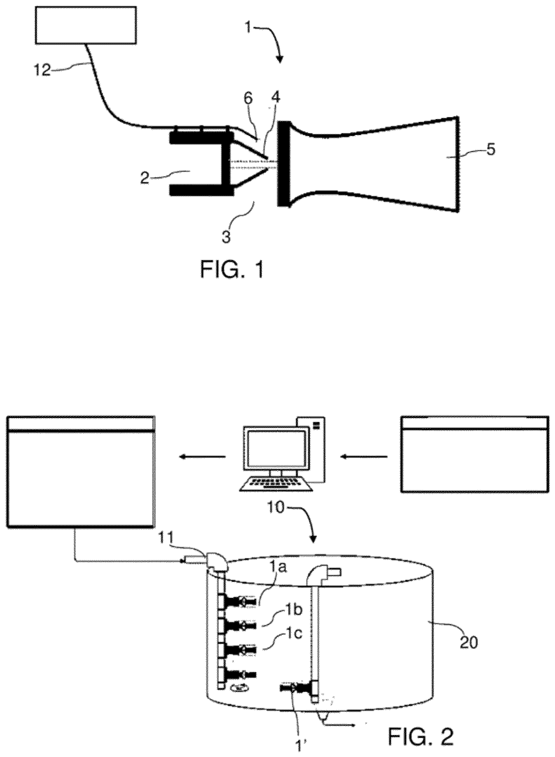

Figure 1 is a schematic longitudinal sectional view of a first embodiment of the eductor that is the object of the present invention.
Figure 2 is a schematic view of a first embodiment of the system that is the object of the present invention.

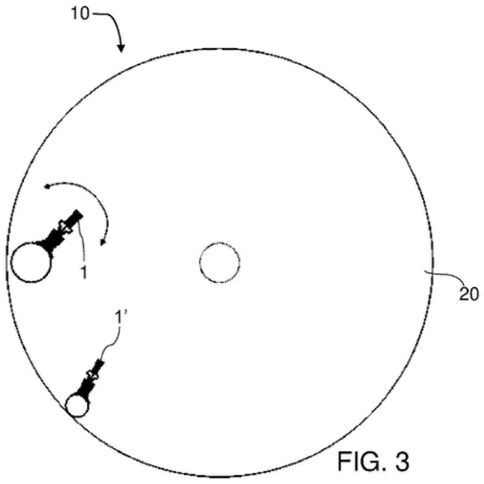

Figure 3 is a schematic top view of a first embodiment of the system that is the object of the present invention.

### Detailed description of the invention

Below, the present invention will be described in detail, referring for this purpose to the figures accompanying the present application.

In a first object of the present invention there is provided an eductor (1) for a fluid injection system (10) in aquaculture ponds (20) that allows the mixing of two or more fluids and the high flow rate injection of said mixture, comprising three fluid inlets (2, 5, 6): a first driving fluid inlet (2); a second fluid suction inlet (3) open to the aquaculture pond (20), in such a way as to allow the entry of the same fluid contained in the aquaculture pond (20); and a third fluid suction inlet (6) isolated from the second fluid suction inlet (3) and from the medium or fluid contained in the aquaculture pond (20).

The eductor (1) further comprises a venturi section (4) in fluid communication with the first driving fluid inlet (2), with the second fluid suction inlet (3) and with the third fluid suction inlet (6); and a fluid outlet (5) connected downstream of the venturi section (4) in fluid communication with said venturi section (4).

In the context of the present invention, the term high "flow rate" is to be understood in terms of the relationship between the outlet flow rate of the eductor and the flow rate of the driving fluid. In this sense, for example and without this limiting the scope of the present invention, it will be understood that the injection is performed with high flow rate when the ratio between the outlet flow rate of the eductor and the flow rate of the driving fluid is greater than a certain threshold value. For example, and without this limiting the scope of the present invention, said threshold value may be greater than 3:2, more preferably greater than 2:1 and even more preferably greater than 5:1.

In the context of the present invention, without this limiting the scope thereof, it is to be understood that the second fluid suction inlet is open to the culture pond when it is immersed in the medium or fluid contained in which the species under culture live.

Moreover, as mentioned and without this limiting the scope of the present invention, the eductor (1), being the subject of the present invention, allows the mixing of two or more fluids. In this regard, the nature of each of said two or more fluids does not limit the scope of the present invention and may depend, for example, and without this limiting the scope of the present invention, on the particular application in which the eductor (1), being the subject of the present invention, is used. Additionally, the proportion of each of the two or more fluids in the mixture does not limit the scope of the present invention.

For example, and without limiting the scope of the present invention, one of the two or more fluids may be water, which is taken from the aquaculture pond (20) in which the system (10) of which the eductor (1), being the object of the present invention, is part and which enters through the second fluid suction inlet (3); and another of the two or more fluids may be air or oxygen, which may be taken from a tank fluidly connected to the third fluid suction inlet (6) of the eductor (1).

In the context of the present invention, without this limiting the scope thereof, it will be understood that two elements are in fluid communication with each other if a fluid may transit from a first of said elements to a second of said elements in an uninterrupted manner and without being exposed to air. A person of ordinary skill in the art will understand that there are different means for providing fluid communication between two elements.

In the context of the present invention, without this limiting the scope thereof, the relative directions above, following, below and the like in relation to the direction of circulation of the driving fluid will be understood when the eductor (1) which is the object of the present invention is normally in use. In this sense, it will be understood that, when the eductor (1), being the object of the present invention, is normally in use, the driving fluid enters through the first driving fluid inlet (2), circulates towards the venturi section (4) and exits the eductor (1) through the fluid outlet (5).

As previously mentioned, the eductor (1), being the object of the present invention, comprises a third fluid suction inlet (6) in fluid communication with the venturi section (4) and isolated from the second fluid suction inlet (3). In the context of the present invention, it will be understood that said third fluid suction inlet (6) is isolated from the second fluid suction inlet (3) if there is no fluid communication between them without the fluid path that joins them passing through the venturi section (4) of the eductor (1).

For example, and without limiting the scope of the present invention, the second fluid suction inlet (3) may be defined by a series of openings to the outside in the venturi section (4) of the eductor, while the third fluid suction inlet (6) may be defined by a connection for a circulation line (12) on a surface of the venturi section (4) of the eductor (1). However, in other preferred embodiments and without limiting the scope of the present invention, both the second fluid suction inlet (3) and the third fluid suction inlet (6) may be defined by respective connections present in the venturi section (4) of the eductor (1).

In a preferred embodiment, the eductor (1) may comprise fluid interruption means operatively connected with the third fluid suction inlet (6). For example, and without this limiting the scope of the present invention, the eductor (1) may comprise a valve at the third fluid suction inlet (6). In this way, without this limiting the scope of the present invention, it is possible to select whether or not injection of the second fluid is desired. Said valve may be both unidirectional and bidirectional without this limiting the scope of the present invention. Furthermore, the nature of said valve does not limit the scope of the present invention and may depend, for example, on the nature of the second fluid, as well as on the conditions of the culture pond (20) in which the eductor (1) which is the subject of the present invention will be used.

In another preferred embodiment, without this limiting the scope of the present invention, the eductor (1), being subject of the present invention, may comprise a detachable cap that is positioned on the third fluid suction inlet (6). In this way, for example and without this limiting the scope of the present invention, it is also possible to select whether or not the injection of the second fluid is desired by mounting or dismounting said cap.

Like other eductors known in the state of the art, the eductor (1), being the object of the present invention, comprises a first driving fluid inlet (2), a second fluid suction inlet (3), a venturi section (4) in fluid communication with the first driving fluid inlet (2) and with the second fluid suction inlet (3) and a fluid outlet (5) connected downstream of the venturi section (4) in fluid communication with said venturi section (4). In this regard, any known options for said first driving fluid inlet (2), for said venturi section (4), for said second fluid suction inlet (3) and for said fluid outlet (5) may be used without this limiting the scope of the present invention.

However, in certain preferred embodiments of the present invention, it is possible to make modifications to said known elements that give one or more technical effects to the eductor (1), being the subject of the present invention.

In a preferred embodiment, without this limiting the scope of the present invention, the fluid outlet (5) may be connected to the venturi section (4) by a detachable connection. In this way, for example and without this limiting the scope of the present invention, it is possible to provide a plurality of fluid outlets (5) interchangeable with each other. For example, each of the fluid outlets 5 may possess a corresponding outlet diameter and a corresponding opening angle. In this way, for example and without this limiting the scope of the present invention, it is possible to provide a plurality of options of volume and size of the thrust cone generated for a same inlet flow rate, by exchanging the fluid outlet (5). The above is particularly advantageous, without this limiting the scope of the present invention, in the case of ponds (20) containing small fish, since by increasing the mass, for the same flow rate, the circular velocity of the fluid is reduced.

The means by which such a detachable connection is provided between the fluid outlet (5) and the venturi section (4) does not limit the scope of the present invention. For example, and without this limiting the scope of the present invention, a threaded connection may be provided between the fluid outlet (5) and the venturi section (4). However, in other exemplary embodiments, without limiting the scope of the present invention, it is possible to provide connecting flanges connected to each other by a clamp and an o-ring.

In a preferred embodiment, without this limiting the scope of the present invention, the first driving fluid inlet (2) may be modified to control the horizontal exit angle of the mixture of the two or more fluids. Advantageously, without this limiting the scope of the present invention, the control of the horizontal exit angle allows, in turn, to control the mixing time and the circular speed of the fluid inside the aquaculture pond (20).

For example, and without this limiting the scope of the present invention, the eductor (1) may comprise a cylindrical linkage or ball joint operatively connected with the first driving fluid inlet (2). In an exemplary embodiment, without limiting the scope of the present application, the cylindrical joint may comprise a first cylindrical section connected with the first driving fluid inlet (2) and a second cylindrical section coaxial with the first cylindrical section and rotatably slidable with respect to the first cylindrical section. In turn, the first cylindrical section may be connected with a circulation line (11) of the driving fluid. In an even more preferred embodiment, it is possible to provide means for fixing the rotation of the second cylindrical section with respect to the first cylindrical section. For example, and without this limiting the scope of the present invention, the first cylindrical section may comprise a through-bore and the second cylindrical section may comprise a plurality of threaded blind bores and the eductor (1) may comprise a through-bolt having a thread complementary to the threaded blind bores.

The present invention further provides a fluid injection system (10) in aquaculture ponds (20) comprising at least one eductor (1) that allows the mixing of two or more fluids and the high-flow injection of said mixture, wherein the at least one eductor (1) comprises three fluid inlets (2, 5, 6): a first driving fluid inlet (2); a second fluid suction inlet (3) open to the aquaculture pond (20), in such a way as to allow the entry of the same fluid contained in the aquaculture pond (20); and a third fluid suction inlet (6) isolated from the second fluid suction inlet (3) and from the medium or fluid contained in the aquaculture pond (20). The at least one eductor (1) further comprises a venturi section (4) in fluid communication with the first driving fluid inlet (2), with the second fluid suction inlet (3) and with the third fluid suction inlet (6); and a fluid outlet (5) connected downstream of the venturi section (4) in fluid communication with said venturi section (4).

Any of the embodiments previously described for the eductor (1) individually, as well as others provided by a person ordinarily skilled in the art, may be applied to the at least one eductor (1) forming part of the system (10) being the subject of the present invention without this limiting the scope of the protection requested.

In a preferred embodiment, the system (10) may comprise: a first circulation line of a first fluid (11) operatively connected with the first inlet of driving fluid (2) of the at least one eductor (1); and a second circulation line of a second fluid (12) operatively connected with the third fluid suction inlet (6) of the at least one eductor (1).

In the context of the present invention, without this limiting the scope thereof, the first fluid circulating through the first circulation line (11) will be understood as the driving fluid, and both terms may be used interchangeably with each other.

In a preferred embodiment, without this limiting the scope of the present invention, the fluid outlet (5) of the at least one eductor (1) may have an axis forming an angle of between 30° and 60°, more preferably of between 40° and 50°, with a line tangent to a point on the inner wall of the aquaculture pond (20) at which the at least one eductor (1) is positioned.

In a preferred embodiment, without this limiting the scope of the present invention, the system (10) may comprise more than one eductor (1) according to any of the preferred embodiments previously set forth. For example, and without limiting the scope of the present invention, the system (10) may comprise a plurality of eductors (1a, 1b, 1c), each of the eductors (1a, 1b, 1c) comprising a corresponding driving fluid inlet, a corresponding first fluid suction inlet, a corresponding venturi section in fluid communication with the corresponding driving fluid inlet and with the corresponding first fluid suction inlet, a corresponding fluid outlet connected downstream of the corresponding venturi section in fluid communication with said corresponding venturi section and a corresponding second fluid suction inlet in fluid communication with the corresponding venturi section and independent of the corresponding first fluid suction inlet; wherein the first fluid circulation line (11) is operatively connected with each of the corresponding driving fluid inlets of the plurality of eductors (1a, 1b, 1c); and wherein the second fluid circulation line (12) is operatively connected with each of the corresponding second fluid suction inlets of the plurality of eductors (1a, 1b, 1c).

In the context of the present invention, the term "plurality" is to be understood as meaning two or more of the elements referred to. The number of elements forming part of said plurality does not limit the scope of the present invention and will depend on the specific application of the at least one eductor (1) or the system (10) being the subject of the present invention. Furthermore, the elements forming part of the plurality may or may not be identical to each other without limiting the scope of the present invention.

In a preferred embodiment, without this limiting the scope of the present invention, the at least one eductor (1) forming part of the system (10), being the subject of the present invention, may be a first eductor and the system may further comprise a second eductor (1') which is positioned at an equivalent point in a radial arc of between 240° to 300°, measured from a location of the first eductor (1). Unlike the first eductor, the second eductor (1') may be a conventional eductor or be an eductor according to any of the previously described embodiments without this limiting the scope of the present invention. In addition, the output flow rate of the second eductor (1') may be equal to, less than, or greater than that of the first eductor without this limiting the scope of the present invention. For example, and without this limiting the scope of the present invention, the output flow rate of the second eductor (1') may be lower than the output flow rate of the first eductor (1). In this last embodiment example, for example, and without this limiting the scope of the present invention, the ratio between the output flow rate of the second eductor (1') and the output flow rate of the first eductor (1) may be less than 2:3, more preferably less than 1:2 and even more preferably less than 1:3.

Additionally, without limiting the scope of the present invention, the fluid outlet (5) of the at least one eductor (1) may have an axis forming an angle of between 30° and 60° with a line tangent to a first point of the aquaculture pond (20) at which the at least one eductor (1) is positioned; and the second eductor (1') may have a second fluid outlet having an axis forming an angle of between 30° and 60° with a line tangent to a second point of the aquaculture pond (20) at which the second eductor (1') is positioned.

In another preferred embodiment, the system may comprise a plurality of second eductors, each positioned in a same line with respect to the second eductor (1').

Advantageously, without this limiting the scope of the present invention, the presence of a second eductor (1') allows to ensure the circular and radial flow pattern of the body of water in the aquaculture pond (20). For example, and without this limiting the scope of the present invention, the inventors of the present invention have concluded that the use of a second eductor (1') allows to maintain or increase between 10% and 15% the rotation speed of the body of water.

Additionally, optionally and without this limiting the scope of the present invention, a system for modeling and controlling the fluid flow of the aquaculture pond (20) may be provided.

For example, and without limiting the scope of the present invention, a processor, a memory and a user interface may be provided that, together, are configured to digitally model the aquaculture pond (20), receive one or more operating parameters of the aquaculture pond (20) from a user and determine a number of eductors (1) that must be installed inside the aquaculture pond (20) to meet the operating requirements. Furthermore, said processor, memory and user interface may be operatively coupled with one or more sensors that allow monitoring at least one operating variable of the aquaculture pond (20), for example, and without this limiting the scope of the present invention, the amount of oxygen dissolved in water, and the processor, memory and user interface may be operatively connected to one or more pumps to control the inlet flow rate of the driving fluid in the eductor (1) forming part of the system (10) being the subject of the present invention.

## Claims

1. An eductor (1) for a fluid injection system (10) in aquaculture ponds (20) that allows the mixing of two or more fluids and the high flow rate injection of said mixture, wherein it comprises three fluid inlets (2, 5, 6):
a first driving fluid inlet (2);
a second fluid suction inlet (3) open to the aquaculture pond (20), in such a way as to allow the entry of the same fluid contained in the aquaculture pond (20); and
a third fluid suction inlet (6) isolated from the second fluid suction inlet (3) and from the medium or fluid contained in the aquaculture pond (20);
a venturi section (4) in fluid communication with the first driving fluid inlet (2), the second fluid suction inlet (3) and the third fluid suction inlet (6); and
a fluid outlet (5) connected downstream of the venturi section (4) in fluid communication with said venturi section (4).

2. The eductor (1) of claim 1, wherein the fluid outlet (5) is connected to the venturi section (4) by a detachable connection.

3. The eductor (1) of claim 2, wherein said detachable connection is a threaded connection.

4. The eductor (1) of claim 2, wherein it comprises a plurality of fluid outlets interchangeable with each other, each of the fluid outlets having a corresponding outlet diameter and a corresponding opening angle.

5. The eductor (1) of claim 1, further comprising a cylindrical linkage operatively connected to the first driving fluid inlet (2).

6. The eductor (1) of claim 5, wherein said cylindrical joint comprises a first cylindrical section connected with the driving fluid inlet (2) and a second cylindrical section coaxial with the first cylindrical section and rotatably slidable with respect to the first cylindrical section.

7. The eductor (1) of claim 6, wherein it comprises means for fixing the rotation of the second cylindrical section with respect to the first cylindrical section.

8. The eductor (1) of claim 1, wherein it comprises fluid interruption means operatively connected with the third fluid suction inlet (6).

9. The eductor (1) of claim 1, wherein the third fluid suction inlet (6) has a detachable cap.

10. A fluid injection system (10) in aquaculture ponds (20) comprising at least one eductor (1) that allows the mixing of two or more fluids and the high flow rate injection of said mixture, wherein the at least one eductor (1) comprises three fluid inlets (2, 5, 6):
a first driving fluid inlet (2);
a second fluid suction inlet (3) open to the aquaculture pond (20), in such a way as to allow the entry of the same fluid contained in the aquaculture pond (20); and
a third fluid suction inlet (6) isolated from the second fluid suction inlet (3) and from the medium or fluid contained in the aquaculture pond (20);
a venturi section (4) in fluid communication with the first driving fluid inlet (2), the second fluid suction inlet (3) and the third fluid suction inlet (6); and
a fluid outlet (5) connected downstream of the venturi section (4) in fluid communication with said venturi section (4).

11. The system (10) of claim 10, **characterized in that** it comprises:
- a first circulation line of a first fluid (11) operatively connected with the first inlet of driving fluid (2) of the eductor (1); and
- a second circulation line of a second fluid (12) operatively connected with the third fluid suction inlet (6) of the eductor (1).

12. The system (10) of claim 11, wherein it comprises a plurality of eductors (1a, 1b, 1c), each of the eductors (1a, 1b, 1c) comprising:
a corresponding driving fluid inlet, a corresponding first fluid suction inlet, a corresponding venturi section in fluid communication with the corresponding driving fluid inlet and with the corresponding first fluid suction inlet, a corresponding fluid outlet connected downstream of the corresponding venturi section in fluid communication with said corresponding venturi section and a corresponding second fluid suction inlet in fluid communication with the corresponding venturi section and independent of the corresponding first fluid suction inlet;
wherein the first fluid circulation line (11) is operatively connected with each of the corresponding driving fluid inlets of the plurality of eductors (1a, 1b, 1c); and
wherein the second fluid circulation line (12) is operatively connected with each of the corresponding second fluid suction inlets of the plurality of eductors (1a, 1b, 1c).

13. The system (10) of claim 10, wherein the eductor (1) is a first eductor; and in that it further comprises a second eductor (1') that is positioned at an equivalent point in a radial arc of between 240° to 300°, measured from a location of the first eductor (1).

14. The system of claim 13, wherein the second eductor (1') comprises three fluid inlets (2, 5 , 6):
a first driving fluid inlet (2);
a second fluid suction inlet (3) open to the aquaculture pond (20), in such a way as to allow the entry of the same fluid contained in the aquaculture pond (20); and
a third fluid suction inlet (6) isolated from the second fluid suction inlet (3) and from the medium or fluid contained in the aquaculture pond (20);
a venturi section (4) in fluid communication with the first driving fluid inlet (2), the second fluid suction inlet (3) and the third fluid suction inlet (6); and
a fluid outlet (5) connected downstream of the venturi section (4) in fluid communication with said venturi section (4).

15. The system (10) of claim 13, wherein an output flow rate of the second eductor (1') is lower than an output flow rate of the first eductor (1).

16. The system of claim 10, wherein the fluid outlet (5) of the at least one eductor (1) has an axis forming an angle of between 30° and 60° with a line tangent to a point on the inner wall of the aquaculture pond (20) at which the at least one eductor (1) is positioned.

17. The system of claim 16, wherein the axis of the fluid outlet (5) of the at least one eductor (1) forms an angle of between 40° and 50° with the line tangent to the point of the aquaculture pond (20) in which the at least one eductor (1) is positioned.

18. The system of claim 13, wherein the fluid outlet (5) of the at least one eductor (1) has an axis forming an angle of between 30° and 60° with a line tangent to a first point of the aquaculture pond (20) at which the at least one eductor (1) is positioned; and in that the second eductor (1') has a second fluid outlet having an axis forming an angle of between 30° and 60° with a line tangent to a second point of the aquaculture pond (20) at which the second eductor (1') is positioned.

19. The system (10) of claim 13, wherein it comprises a plurality of second eductors, each being positioned in a same line with respect to the second eductor (1').

## Amended claims

### Amended claims under Art. 19.1 PCT

1. An eductor (1) for a fluid injection system (10) in aquaculture ponds (20) that allows the mixing of two or more fluids and the high flow rate injection of said mixture, wherein it comprises three fluid inlets (2, 5, 6):
a first driving fluid inlet (2);
a second fluid suction inlet (3) open to the aquaculture pond (20), in such a way as to allow the entry of the same fluid contained in the aquaculture pond (20); and
a third fluid suction inlet (6) isolated from the second fluid suction inlet (3) and from the medium or fluid contained in the aquaculture pond (20);
a venturi section (4) in fluid communication with the first driving fluid inlet (2), the second fluid suction inlet (3) and the third fluid suction inlet (6); and
a fluid outlet (5) connected downstream of the venturi section (4) in fluid communication with said venturi section (4);
wherein the eductor (1) further comprises a cylindrical linkage operatively connected with the first driving fluid inlet (2).

2. The eductor (1) of claim 1, wherein the fluid outlet (5) is connected to the venturi section (4) by a detachable connection.

3. The eductor (1) of claim 2, wherein said detachable connection is a threaded connection.

4. The eductor (1) of claim 2, wherein it comprises a plurality of fluid outlets interchangeable with each other, each of the fluid outlets having a corresponding outlet diameter and a corresponding opening angle.

5. The eductor (1) of claim 1, wherein said cylindrical linkage comprises a first cylindrical section connected with the driving fluid inlet (2) and a second cylindrical section coaxial with the first cylindrical section and rotatably slidable with respect to the first cylindrical section.

6. The eductor (1) of claim 5, wherein it comprises means for fixing the rotation of the second cylindrical section with respect to the first cylindrical section.

7. The eductor (1) of claim 1, wherein it comprises fluid interruption means operatively connected with the third fluid suction inlet (6).

8. The eductor (1) of claim 1, wherein the third fluid suction inlet (6) has a detachable cap.

9. A fluid injection system (10) in aquaculture ponds (20) comprising at least one eductor (1) that allows the mixing of two or more fluids and the high flow rate injection of said mixture, wherein the at least one eductor (1) comprises three fluid inlets (2, 5, 6):
a first driving fluid inlet (2);
a second fluid suction inlet (3) open to the aquaculture pond (20), in such a way as to allow the entry of the same fluid contained in the aquaculture pond (20); and
a third fluid suction inlet (6) isolated from the second fluid suction inlet (3) and from the medium or fluid contained in the aquaculture pond (20);
a venturi section (4) in fluid communication with the first driving fluid inlet (2), the second fluid suction inlet (3) and the third fluid suction inlet (6); and
a fluid outlet (5) connected downstream of the venturi section (4) in fluid communication with said venturi section (4);
wherein the eductor (1) further comprises, a cylindrical linkage operatively connected with the first driving fluid inlet (2).

10. The system (10) of claim 9, wherein it comprises:
a first circulation line of a first fluid (11) operatively connected with the first inlet of driving fluid (2) of the eductor (1); and
- a second circulation line of a second fluid (12) operatively connected with the third fluid suction inlet (6) of the eductor (1).

11. The system (10) of claim 10, wherein it comprises a plurality of eductors (1a, 1b, 1c), each of the eductors (1a, 1b, 1c) comprising:
a corresponding driving fluid inlet, a corresponding first fluid suction inlet, a corresponding venturi section in fluid communication with the corresponding driving fluid inlet and with the corresponding first fluid suction inlet, a corresponding fluid outlet connected downstream of the corresponding venturi section in fluid communication with said corresponding venturi section; a corresponding second fluid suction inlet in fluid communication with the corresponding venturi section and independent of the corresponding first fluid suction inlet; and a corresponding cylindrical joint operatively connected with the corresponding driving fluid inlet.
wherein the first fluid circulation line (11) is operatively connected with each of the corresponding driving fluid inlets of the plurality of eductors (1a, 1b, 1 c); and
wherein the second fluid circulation line (12) is operatively connected with each of the corresponding second fluid suction inlets of the plurality of eductors (1a, 1b, 1c).

12. The system (10) of claim 9, wherein the eductor (1) is a first eductor; and in that it further comprises a second eductor (1') that is positioned at an equivalent point in a radial arc of between 240° to 300°, measured from a location of the first eductor (1).

13. The system of claim 12, wherein the second eductor (1') comprises three fluid inlets (2, 5, 6):
a first driving fluid inlet (2);
a second fluid suction inlet (3) open to the aquaculture pond (20), in such a way as to allow the entry of the same fluid contained in the aquaculture pond (20); and
a third fluid suction inlet (6) isolated from the second fluid suction inlet (3) and from the medium or fluid contained in the aquaculture pond (20);
a venturi section (4) in fluid communication with the first driving fluid inlet (2), the second fluid suction inlet (3) and the third fluid suction inlet (6); and
a fluid outlet (5) connected downstream of the venturi section (4) in fluid communication with said venturi section (4);
wherein the second eductor (1') further comprises, a cylindrical linkage operatively connected to its first driving fluid inlet (2).

14. The system (10) of claim 12, wherein an output flow rate of the second eductor (1') is lower than an output flow rate of the first eductor (1).

15. The system of claim 9, wherein the fluid outlet (5) of the at least one eductor (1) has an axis forming an angle of between 30° and 60° with a line tangent to a point on the inner wall of the aquaculture pond (20) at which the at least one eductor (1) is positioned.

16. The system of claim 15, wherein the axis of the fluid outlet (5) of the at least one eductor (1) forms an angle of between 40° and 50° with the line tangent to the point of the aquaculture pond (20) in which the at least one eductor (1) is positioned.

17. The system of claim 12, wherein the fluid outlet (5) of the at least one eductor (1) has an axis forming an angle of between 30° and 60° with a line tangent to a first point of the aquaculture pond (20) at which the at least one eductor (1) is positioned; and in that the second eductor (1') has a second fluid outlet having an axis forming an angle of between 30° and 60° with a line tangent to a second point of the aquaculture pond (20) at which the second eductor (1') is positioned.

18. The system (10) of claim 12, wherein it comprises a plurality of second eductors, each being positioned in a same line with respect to the second eductor (1').
